# EUROPEAN PATENT APPLICATION

(11) **EP 4 012 451 A1**
(43) Date of publication of application: **15.06.2022**
(21) Application number: 20213085.2
(22) Date of filing: 10.12.2020
(51) Int. Cl.: G01S 13/931, G01S 15/931, G01S 17/931, G01S 13/86, G01S 15/86, G01S 17/86, G01S 7/40, G01S 7/497, G01S 7/52, B60R 11/04

(54) **A SYSTEM AND METHOD FOR CALIBRATING A PORTABLE VEHICLE SENSOR**

(71) Applicant: VOLVO TRUCK CORPORATION, 405 08 Göteborg (SE)
(72) Inventor: DERAGÅRDEN, Hans, 429 31 Kullavik (SE)
(74) Representative: Valea AB

(57) **Abstract**

The invention relates to a system (1) and method for calibrating a portable vehicle sensor (2) which is releasably mountable to a vehicle (100) at least at a first (P1) and a second (P2) position on the vehicle (100), wherein the first and second positions (P1, P2) are offset from each other, the system comprising:
- inputting means (11) configured to receive position information (x1, y1, z1) relating to the second position (P2) when or after the portable vehicle sensor (2) has been moved from the first position (P1) to the second position (P2);
- calibration means (12) configured to calibrate the position of the portable vehicle sensor (2) with respect to the second position (P2) by use of the received position information.

## Description

### TECHNICAL FIELD

The invention relates to a system and method for calibrating a portable vehicle sensor which is releasably mountable to a vehicle at least at a first and a second position on the vehicle. The invention also relates to a vehicle, a control unit and to a portable measurement device for calibrating a portable vehicle sensor which is releasably mountable to a vehicle.

The invention can be applied in heavy-duty vehicles, such as trucks, buses and construction equipment. Although the invention will be described with respect to a heavy-duty truck, the invention is not restricted to this particular vehicle, but may also be used in other vehicles such as wheel loaders, excavators, buses, and also passenger cars.

### BACKGROUND

It is well known to provide and use externally mounted sensors on vehicles, such as cameras, ultrasonic sensors, RADAR (Radio Detection And Ranging) sensors etc. The sensors may for example be used for different kinds of driver assistance systems, including but not limited to reverse assistance systems.

The vehicle sensors are provided on fixed and predefined positions on the vehicle. They are further adapted and configured for the predefined positions by the original equipment manufacturer (OEM), such as by the truck manufacturer. In particular, it is important to calibrate a vehicle sensor with respect to its predefined position so that the vehicle sensor can be used for its purpose, such as used for the above-mentioned reverse assistance system. Thereby, the OEM of the vehicle typically calibrates the vehicle sensors before the vehicle is delivered to its user.

Commercial vehicles, including but not limited to heavy-duty trucks, may after its delivery from the OEM be complemented by further components and equipment. For example, a crane may be provided on a heavy-duty truck at its rear after delivery, a cargo container may be mounted on a truck after its delivery etc. The added components and equipment may therefore occlude the view for the vehicle sensors.

In addition, for vehicles which can tow one or more trailers it has been realized that the trailers may not always comprise vehicle sensors for e.g. the towing vehicle's driver assistance systems. Therefore, the one or more connected trailers may occlude the view of the vehicle sensors.

In view of the above, it has been realized that there is a need to provide vehicle sensors which are portable, and further it has been realized that there is a need to adapt and configure the portable vehicle sensors.

### SUMMARY

Therefore, an object of the invention is to provide an improved system and method for calibrating a portable vehicle sensor which is releasably mountable to a vehicle at least at a first and a second position on the vehicle. In addition, an object of the invention is to provide an improved vehicle, an improved control unit and an improved portable measurement device.

According to a first aspect of the invention, the object is achieved by a system according to claim 1. Thus, a system is provided for calibrating a portable vehicle sensor which is releasably mountable to a vehicle at least at a first and a second position on the vehicle, wherein the first and second positions are offset from each other. The system comprises:
- inputting means configured to receive position information relating to the second position when or after the portable vehicle sensor has been moved from the first position to the second position;
- calibration means configured to calibrate the position of the portable vehicle sensor with respect to the second position by use of the received position information.

Preferably, at least one of the first and second positions is an external position of the vehicle. By an external position is herein meant a position from which the portable vehicle sensor can perceive an external environment with respect to the vehicle. Accordingly, as non-limiting examples, an external position may be a position on an exterior surface of the vehicle, or an external position may be a position at least partly within a sensor compartment comprising a window through which the sensor can perceive the external environment. Optionally, the first and the second positions are both external positions. Still optionally, one of the positions may be an internal position of the vehicle, e.g. within a vehicle cabin. Purely by way of example, such internal position may be a provisional sensor position, i.e. a position only for storing the portable vehicle sensor, and not a position for using it.

The expression *"releasably mountable"* as used herein means that the portable vehicle sensor can be mounted to a mounting position and also released from the mounting position after it has been mounted thereto. Preferably, the portable vehicle sensor can be released from the mounting position without damaging the portable vehicle sensor and/or any portion of the mounting position.

By the provision of a system as disclosed herein, an improved system is provided for which the portable vehicle sensor can be easily calibrated after it has been moved from the first position to the second position. In particular, as mentioned in the above, the present invention is based on a realization that it may be advantageous to move a portable vehicle sensor between different positions on the vehicle. Therefore, it has also been realized that there is a need for calibrating the portable vehicle sensor with respect to the new position after it has been moved. After calibration has been performed, the portable vehicle sensor may be better adapted and configured for its purpose, such as for a driver assistance system of the vehicle, or for any other vehicle assistance system. Additionally, or alternatively, the portable vehicle sensor may also be used for autonomous or semi-autonomous driving systems of the vehicle. Accordingly, by the provision of the present invention, the portable vehicle sensor can be moved without compromising its functionality. Consequently, a flexible system is achieved where the functionality of the vehicle and its systems can be maintained, and even improved in some situations.

Optionally, the inputting means may further be configured to receive orientation information relating to the second position when or after the portable vehicle sensor has been moved from the first position to the second position, and wherein the calibration means is further configured to calibrate the orientation of the portable vehicle sensor with respect to the second position by use of the received orientation information. Thereby, further improved calibration may be provided, if the orientation of the portable vehicle sensor also has been adjusted.

Optionally, the received position information may comprise information about a relative position with respect to the first position, and/or wherein the received orientation information may comprise information about a relative orientation with respect to the first position and/or with respect a first orientation of the portable vehicle sensor at the first position. Thereby it may be easier to perform the calibration by using the first position as reference for the second position.

Preferably, the system further comprises a portable measurement device for obtaining the position information and/or the orientation information. It has been realized that a portable measurement device may significantly facilitate the calibration operation by a user. In particular, it may be advantageous for a user to be able to move and come closer to the second position for the calibration. As such, by the provision of a portable measurement device, further improved and/or a more time-efficient calibration may be performed.

Optionally, the portable measurement device may be a handheld device, such as a smartphone, a tablet computer or the like. Thereby it may be easier for a user to carry the portable measurement device when e.g. walking around the vehicle. Still optionally, the portable measurement device may be integrated with the portable vehicle sensor, implying further facilitated calibration for a user. As such, only one device may be required, instead of two separate devices. Still optionally, the portable measurement device may be integrated with another portable vehicle sensor and configured for calibrating the portable vehicle sensor. According to a yet further embodiment, the calibration may be performed by use of a vehicle sensor of another vehicle. The vehicle sensor of the another vehicle may for example be a stationary vehicle sensor which is fixedly mounted thereto.

Optionally, the portable measurement device may comprise any one or a combination of a motion sensor, a rotation sensor, a GNSS (Global Navigation Satellite System) system and a perception sensor for obtaining the position information and/or the orientation information. Thereby, the calibration may be further improved and facilitated. For example, the portable measurement device may be provided close to, or even in contact with, the second position for the calibration. As such, by use of the aforementioned sensors/system, the position and/or orientation of the portable measurement device may be used for the calibration. Additionally, or alternatively, the position and/or orientation may be obtained by a perception sensor when the portable measurement device is provided remotely from the second position.

Optionally, the portable measurement device may further comprise communication means for automatically communicating the obtained position and/or orientation to the inputting means.

Optionally, the system may further comprise a vehicle parameter database comprising information about one or more reference measurement positions on the vehicle, wherein the calibration means is further configured to calibrate the position and/or orientation by use of the information about the one or more reference measurement positions. It has been realized that the calibration may be further improved or facilitated by using such a vehicle parameter database. For example, by using one or more reference measurement positions, a distance from the second position to any one of the reference measurement positions may be obtained. This information may advantageously be used for further improving the calibration and/or for reducing the time for performing the calibration.

Optionally, the system may be configured to calibrate the portable measurement device by use of information from the vehicle parameter database which is indicative of a distance between at least two reference measurement positions on the vehicle. Accordingly, the portable measurement device may measure the distance between the at least two reference measurement positions on the vehicle by use of e.g. the aforementioned sensors. By obtaining the distance from the vehicle parameter database, the portable measurement device can be calibrated. For example, the measured distance may have a fault, whereby a measurement fault factor for the portable measurement device can be determined.

Optionally, the inputting means may comprise a human machine interface (HMI) for manually inputting position information and/or orientation information. This may further facilitate the calibration procedure for a user.

According to a second aspect of the invention, the object is achieved by a vehicle according to claim 11. Thus, a vehicle is provided which comprises at least a first and a second position on the vehicle at which a portable vehicle sensor is releasably mountable, wherein the first and second positions are offset from each other, and wherein the vehicle further comprises the system according to any one of the embodiments according to the first aspect.

Advantages and effects of the second aspect are largely analogous to advantages and effects of the first aspect. It shall also be noted that all embodiments of the second aspect are applicable to all embodiments or the first aspect, and vice versa.

Optionally, the vehicle may be a vehicle combination comprising a towing vehicle and at least one connected vehicle, such as a trailer. According to an example, the first position may be a position on the vehicle and the second position may be a position on the connected vehicle. For example, the portable vehicle sensor may be used for perceiving an environment behind the vehicle, and when the connected vehicle has been connected to the vehicle, it may occlude the sight behind the vehicle. Therefore, moving the portable vehicle sensor to a second position which is located so that the portable vehicle sensor can perceive the environment behind the connected vehicle, it can continue to be used for its original purpose. In addition, by allowing the portable vehicle sensor to be calibrated by the system, the performance can be maintained, and also the calibration can be performed in a fast and efficient manner.

Optionally, the first and second positions may comprise a respective sensor bracket for releasably holding the portable vehicle sensor. Still optionally, at least one of the first and second positions may comprise a magnetic member for releasably holding the portable vehicle sensor. Accordingly, the portable vehicle sensor may comprise a corresponding magnetic member. Still optionally, at least one of the first and second positions may comprise a surface for attaching a suction cup of the portable vehicle sensor thereto. Thereby, fast and easy mounting and release of the portable vehicle sensor can be achieved.

The portable vehicle sensor may be any kind of sensor for the vehicle, such as a camera, a RADAR, a LIDAR (laser imaging, detection, and ranging), a SONAR (sound navigation ranging), ultrasonic sensor or the like.

According to a third aspect of the invention, the object is achieved by a method according to claim 14. Thus, a method is provided for calibrating a portable vehicle sensor which is releasably mountable to a vehicle at least at a first and a second position on the vehicle, wherein the first and second positions are offset from each other. The method comprises:
- receiving position information relating to the second position when or after the portable vehicle sensor has been moved from the first position to the second position;
- calibrating the position of the portable vehicle sensor with respect to the second position by use of the obtained position information.

Advantages and effects of the third aspect are largely analogous to advantages and effects of the first and second aspects. It shall also be noted that all embodiments of the third aspect are applicable to all embodiments or the first and second aspects, and vice versa.

Optionally, the method may further comprise:
- receiving orientation information relating to the second position when or after the portable vehicle sensor has been moved from the first position to the second position, and
- calibrating the orientation of the portable vehicle sensor with respect to the second position by use of the received orientation information.

Optionally, the received position information may comprise information about a relative position with respect to the first position, and/or the received orientation information may comprise information about a relative orientation with respect to the first position and/or with respect a first orientation of the portable vehicle sensor at the first position.

Optionally, the method may further comprise obtaining the position information and/or the orientation information by a portable measurement device.

Optionally, the method may further comprise automatically communicating the obtained position and/or orientation to inputting means by communication means of the portable measurement device.

Optionally, the method may further comprise calibrating the position and/or orientation by use of information about one or more reference measurement positions comprised in a vehicle parameter database.

Optionally, the method may further comprise calibrating the portable measurement device by use of information from the vehicle parameter database which is indicative of a distance between at least two reference measurement positions on the vehicle. Optionally, the method may further comprise manually inputting position information and/or orientation information by use of a human machine interface (HMI).

According to a fourth aspect of the invention, the object is achieved by a control unit according to claim 15. Thus, a control unit for a vehicle is provided for calibrating a portable vehicle sensor which is releasably mountable to the vehicle at least at a first and a second position on the vehicle, wherein the control unit is configured to perform the steps of the method according to any one of the embodiments of the third aspect of the invention.

Advantages and effects of the fourth aspect are largely analogous to advantages and effects of the fourth aspect. It shall also be noted that all embodiments of the fourth aspect are applicable to all embodiments or the other aspects, and vice versa.

According to a fifth aspect of the invention, the object is achieved by a portable measurement device according to claim 16. Thus, a portable measurement device for a system according to any one of the embodiments of the first aspect is provided, wherein the portable measurement device is configured to obtain the position information and/or the orientation information, and further configured to provide the position and/or orientation information to the inputting means of the system.

Advantages and effects of the fifth aspect are largely analogous to advantages and effects of the other aspects. It shall also be noted that all embodiments of the fifth aspect are applicable to all embodiments or the other aspects, and vice versa.

According to a sixth aspect of the invention, the object is achieved by a portable measurement device according to claim 17. Thus, a portable measurement device for calibrating a portable vehicle sensor which is releasably mountable to a vehicle is provided, wherein the portable measurement device is configured to:
- obtain position information and/or orientation information relating to a mounting position when or after the portable vehicle sensor has been moved to the mounting position;
- provide the obtained position information and/or orientation information to inputting means of a system for calibrating the portable vehicle sensor.

Advantages and effects of the sixth aspect are largely analogous to advantages and effects of the other aspects. It shall also be noted that all embodiments of the fifth aspect are applicable to all embodiments or the other aspects, and vice versa.

By the provision of the portable measurement device as disclosed herein, improved and facilitated calibration for a user of the vehicle is achieved. In particular, it has been realized that it is advantageous to provide a user with a portable device which can be used for calibrating the portable vehicle sensor when it is moved between different positions on the vehicle, and also when it is installed on the vehicle for the first time. As such, a user, such as a driver, a workshop technician or a user installing e.g. a vehicle crane, can easily calibrate the portable vehicle sensor when it is mounted to a position on the vehicle.

The portable measurement device may as mentioned in the above be a handheld device, such as a smartphone, a tablet computer or the like. It may further comprise any one or a combination of a motion sensor, a rotation sensor, a GNSS system and a perception sensor for obtaining the position information and/or the orientation information. It may further comprise communication means for automatically communicating the obtained position and/or orientation to e.g. inputting means of a vehicle onboard system. Still optionally, as mentioned in the above, the portable measurement device may be integrated with the portable vehicle sensor, implying further facilitated calibration for a user. As such, only one device may be required, instead of two separate devices.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1 is a perspective view of a vehicle according to an example embodiment of the present invention;
Fig. 2 is a schematic view of a system according to an example embodiment of the present invention;
Figs. 3a-b are schematic views from a side of a vehicle and vehicle combination according to example embodiments of the present invention;
Fig. 4 is a flowchart of a method according to an example embodiment of the present invention; and
Fig. 5 is a schematic view of a portable measurement device according to an example embodiment of the present invention.

### DETAILED DESCRIPTION OF EXAMPLE EMBODIMENTS OF THE INVENTION

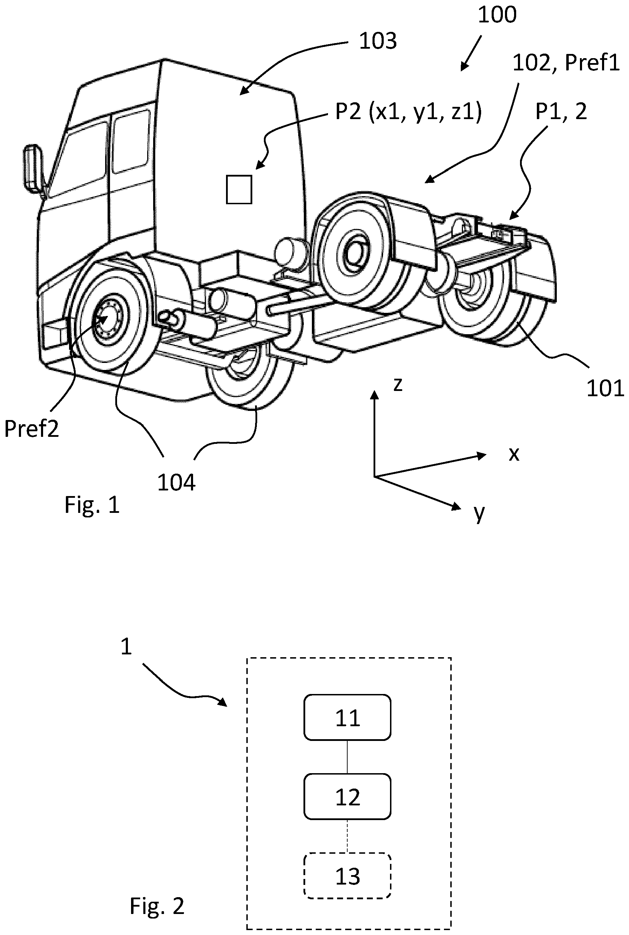

Fig. 1 shows a perspective view of a vehicle 100 in the form of a truck. More specifically, the truck 100 as shown is a towing truck, or tractor, for towing a trailer, such as a semitrailer. It shall however be noted that the invention is not limited to only this type of vehicle, but may also advantageously be used for any other vehicle as e.g. mentioned in the above.

With respect to figs. 1 and 2, a system 1 for calibrating a portable vehicle sensor 2 according to example embodiments is depicted. The portable vehicle sensor 2 is releasably mountable to the vehicle 100 at least at a first P1 and a second P2 position on the vehicle 100. The first and second positions P1, P2 are as shown offset from each other. More specifically, the first position P1 is here provided behind rear wheels 101 of the vehicle 100. It is also provided below a coupling member 102 for a trailer. The coupling member 102 is here in the form of a so called fifth wheel. In the shown embodiment, the portable vehicle sensor 2 is currently releasably mounted at the first position P1. The portable vehicle sensor 2, which may be any kind of sensor as e.g. mentioned herein, is here a camera for obtaining a rear-view with respect to the vehicle 100. More specifically, the camera 2 is directed in a direction substantially corresponding to a longitudinal direction x of the vehicle 100. The direction x thus corresponds to a rearward direction of the vehicle 100, i.e. a direction opposite to a forward direction of the vehicle 100. The x-axis is here part of a Cartesian coordinate system, further comprising a lateral axis y and a vertical axis z, as seen when the vehicle 100 is provided on a flat horizontally extending surface.

The system 1 comprises inputting means 11 configured to receive position information x1, y1, z1 relating to the second position P2 when or after the portable vehicle sensor 2 has been moved from the first position P1 to the second position P2. The second position P2, corresponding to x1, y1 and z1 with respect to the Cartesian coordinate system is here a position at a vertical rear surface of a vehicle cabin 103 of the vehicle 100.

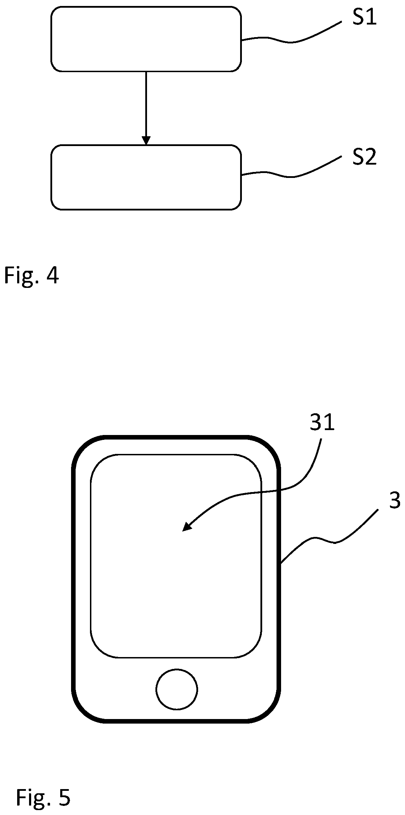

The inputting means 11 may be any kind of inputting means, such as a human machine interface (HMI) in the form of a touch display or a keyboard (not shown) of the vehicle 100. Additionally, or alternatively, the inputting means 11 may be a wireless receiver of the system 1 which is communicating with a portable measurement device 3 as shown in fig. 5. The inputting means 11 may also, or alternatively, be a wired receiver, to which the portable measurement device 3 can be connected via wired connection.

The system 1 as shown in fig. 2 is preferably an onboard system of the vehicle 100. However, the system could alternatively, or additionally, be an offboard system, such as a cloud-based system that communicates with other systems of the vehicle 100.

The system 1 further comprises calibration means 12 configured to calibrate the position of the portable vehicle sensor 2 with respect to the second position P2 by use of the received position information. Accordingly, the inputting means 11 and the calibration means 12 are communicatively connected, indicated by the line between the boxes 11 and 12 in fig. 2. The calibration means 12 and/or at least parts of the inputting means 11 are preferably provided as a control unit, i.e. an electronic control unit comprising processing circuitry, hardware and/or software for performing a method as disclosed herein. Accordingly, the system 1, indicated by dashed lines, preferably comprises an electronic control unit, one or more memory units, a HMI and/or a wireless/wired receiver etc. According to an example embodiment, the system 1 comprises a computer.

The inputting means 11 may further be configured to receive orientation information ϕ, θ, Ψ relating to the second position P2 when or after the portable vehicle sensor 2 has been moved from the first position P1 to the second position P2, and wherein the calibration means 12 is further configured to calibrate the orientation of the portable vehicle sensor 2 with respect to the second position P2 by use of the received orientation information. Thereby a further improved calibration of the portable vehicle sensor 2 may be achieved, also allowing the portable vehicle sensor 2 to have different orientations at the first and second positions P1, P2. In the embodiment shown in fig. 1, ϕ corresponds to a rotation about the x-axis, θ corresponds to a rotation about the y-axis and Ψ corresponds to a rotation about the z-axis.

The received position information may comprise information about a relative position with respect to the first position P1, and/or the received orientation information may comprise information about a relative orientation with respect to the first position P1 and/or or with respect a first orientation of the portable vehicle sensor 2 at the first position P1. The relative position and/or orientation information may for example be beneficial in order to easily update a driver assistance system or any other vehicle system which uses information from the portable vehicle sensor 2. For example, a vehicle system which is configured to issue a warning signal if the vehicle 100 is close to or about to hit an object during reversing needs to know where the portable vehicle sensor 2 is positioned with respect to a rearmost portion of the vehicle 100 which first would hit the object. This relative position may already be known for the position P1 as e.g. shown in fig. 1. For example, the position P1 may here be the rearmost portion of the vehicle 100. As such, by using information about a relative position with respect to the first position P1 for the calibration, the calibration may be easily conducted, implying less processing power and faster calibration.

The system 1 may as shown in fig. 2 further comprise a vehicle parameter database 13 which comprises information about one or more reference measurement positions on the vehicle 100, wherein the calibration means 12 is further configured to calibrate the position and/or orientation by use of the information about the one or more reference measurement positions Pref1, Pref2. The vehicle parameter database 13 is indicated in fig. 2 by a box with dashed lines, implying that it is optional for the system 1. The vehicle parameter database 13 may be provided onboard the vehicle 100, in a memory unit, and/or it may be provided offboard, such as in the above-mentioned cloud. Accordingly, the vehicle 100 may comprise means for wireless communication, such as a V2X (vehicle-to-everything) system, with another entity. For example, Pref1 may be associated with a position of the coupling member 102. This position may be important to relate to and be aware of for a driver assistance system, since it corresponds to a pivot axle about which the non-shown trailer will pivot with respect to the vehicle 100 during use. The pivot axle is likely substantially parallel with the z-axis. In addition, purely by way of example, another reference measurement position may be Pref2 which is associated with a wheel axle comprising steerable wheels 104. This may also be an important position to relate to and be aware of for a driver assistance system, such as a reverse assistance system.

By using the one or more reference measurement positions, the calibration of the portable vehicle sensor 2 may be improved and adapted for its purpose more quickly, and also less processing power may be required for the calibration.

The vehicle parameter database 13 may comprise further measurement positions and/or other information about geometric properties of the vehicle 100. For example, it may comprise information about distance between wheel axles of the vehicle 100, vehicle height, vehicle width etc. This information may also be used for the calibration when the portable vehicle sensor 2 is moved to a new position on the vehicle 100.

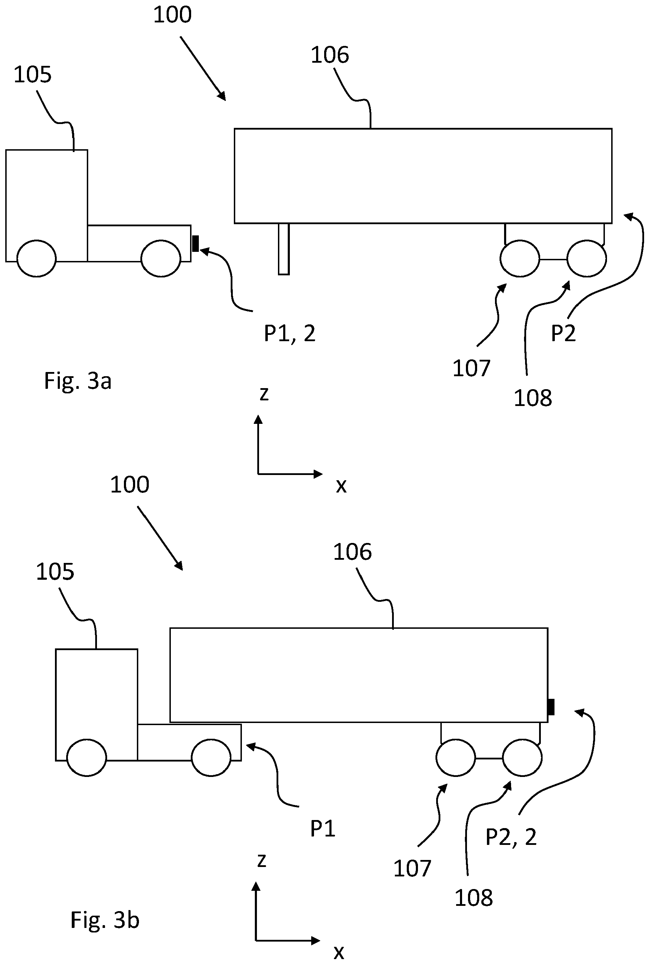

Referring to figs. 3a and 3b, a schematic side view of a vehicle 100 in the form of a vehicle combination is shown. The shown vehicle 100 comprises a towing vehicle 105 and a trailer 106. In the shown embodiment, the first position P1 is similar to the position P1 in fig. 1. However, the second position P2 is here a position on the trailer 106. More specifically, the second position P2 is a position at a rear of the trailer 106, so that the portable vehicle sensor 2 can obtain e.g. an image behind the trailer 106 when it is mounted at the position P2 as shown in fig. 3b. When the towing vehicle 105 is not connected to the trailer 106, the portable vehicle sensor is preferably mounted at the position P1. Accordingly, by the provision of the present invention, the portable vehicle sensor 2 can be easily calibrated when moved on the vehicle 100 between different mounting positions. The vehicle 100 is also here provided in a space defined by a Cartesian coordinate system, similar to fig. 1. It shall however be noted that the space may be defined by any other coordinate system, which may be used for the calibration.

Any one of the shown vehicles 100 may comprise a sensor bracket (not shown) for releasably holding the portable vehicle sensor 2. The portable vehicle sensor 2 may be releasably mounted by use of magnetic force and/or by use of vacuum force, such as one or more suction cups. Alternatively, the portable vehicle sensor 2 may be releasably mounted by more conventional means, such as by screws and/or bolts.

Further, the above-mentioned vehicle parameter database 13 may also comprise information about the trailer 106, such as but not limited to geometric information as mentioned in the above. In addition, or alternatively, the vehicle parameter database 13 may also comprise information about type of trailer, which may be used for the calibration. For example, the information relating to type of trailer may for example define an effective wheel axle for the trailer 106. An effective wheel axle may be defined as an imaginary wheel axle about which the trailer 106 will pivot when the trailer is moving and turning. For example, an effective wheel axle may be provided between the two rear axles 107, 108 of the trailer 106 as shown in figs. 3a and 3b.

Referring to fig. 5, a portable measurement device 3 according to an example embodiment of the invention is shown. The portable measurement device 3 is here a handheld device, such as a tablet or smartphone, and may e.g. comprise an "app", also known as e.g. a "mobile app" to perform certain tasks, such as for obtaining the position information and/or the orientation information.

Alternatively, the portable measurement device may be integrated with the portable vehicle sensor, implying further facilitated calibration for a user. As such, only one device may be required, instead of two separate devices. According to a yet further embodiment, the calibration may be performed by use of a vehicle sensor of another vehicle (not shown). The vehicle sensor of the another vehicle may for example be a stationary vehicle sensor which is fixedly mounted thereto. For example, the vehicle sensor of the another vehicle may be a perception sensor which may be used for obtaining position and/or orientation information of the second position P2 for the calibration.

The portable measurement device 3 may be part of the system 1 as shown in fig. 2, but it may also be used for calibrating a portable vehicle sensor 2 at its first installation to the vehicle 100.

The portable measurement device 3 preferably further comprises any one or a combination of a motion sensor, a rotation sensor, a GNSS system and a perception sensor for obtaining the position information and/or the orientation information. For example, the portable measurement device 3 may be provided at the position P2, whereby the position information x1, y1, and z1 is at least partly obtained by use of the GNSS system. Additionally, or alternatively, the position information of P2 may be obtained by use of a camera (not shown) of the portable measurement device 3. For example, the position information of P2 may be obtained by use of an image recognition algorithm in combination with the vehicle parameter database 13. As such, the image recognition algorithm may e.g. obtain a distance between the position P2 and a reference measurement position, such as at least one of the reference measurement positions Pref1, Pref2 as shown in fig. 1. In addition, the orientation information may be obtained by use of the aforementioned rotation sensor, which may be a gyro sensor of the portable measurement device 3, such as a MEMS (Microelectromechanical systems) gyroscope.

The portable measurement device 3 may further comprise a communication means (not shown) for automatically communicating the obtained position and/or orientation to the inputting means 11. For example, the communication means may be wireless, such as Bluetooth or the like, wherein a communicative connection is established with a wireless receiver as mentioned in the above. The information may be communicated directly when it is obtained, when a user pushes a button on e.g. the touchscreen, or at any other suitable time controlled by e.g. the portable measurement device 3.

The portable measurement device 3 preferably comprises a display 31 for a user, which may be a touch screen. The user may by use of the touch screen 31 indicate where the new position P2 is located in the image, whereby the above-mentioned image recognition algorithm then obtains the position information of the second position P2. The display 31 may further be used for manually inputting values, such as measured position information. Accordingly, the display 31 may be part of the inputting means 11 of the system 1. Additionally, or alternatively, the portable measurement device 3 may comprise voice control means and/or sound control means for a user, e.g. for inputting position and/or orientation information about the second position P2.

The system 1 may be configured to calibrate the portable measurement device 3 by use of information from the vehicle parameter database 13 which is indicative of a distance between at least two reference measurement positions on the vehicle 100. For example, a user may obtain an image of a camera of the portable measurement device 3, whereby the user then indicates where two positions are provided in the image, which indicated positions refer to the two reference measurement positions. Thereby, the portable measurement device 3 can be calibrated so that e.g. the image recognition algorithm is able to provide more correct distance information.

Referring to fig. 4, a flowchart of a method for calibrating a portable vehicle sensor 2 which is releasably mountable to a vehicle 100 at least at a first and a second position P1, P2 on the vehicle 100 is shown. The first and second positions P1, P2 are offset from each other. The method comprises:
S1: receiving position information x1, y1, z1 relating to the second position P2 when or after the portable vehicle sensor 2 has been moved from the first position P1 to the second position P2;
S2: calibrating the position of the portable vehicle sensor 2 with respect to the second position P2 by use of the obtained position information.

The method may comprise further optional steps, as mentioned in the above. Preferably, the method is implemented in a control unit for a vehicle 100 for calibrating a portable vehicle sensor 2 which is releasably mountable to the vehicle 100 at least at a first and a second position P1, P2 on the vehicle 100. The control unit may comprise or utilize a computer program which is configured to perform at least parts of the steps of the method. The control unit is preferably an electronic control unit. It may be constituted as one control unit or as a two or more sub-control units.

It is to be understood that the present invention is not limited to the embodiments described above and illustrated in the drawings; rather, the skilled person will recognize that many changes and modifications may be made within the scope of the appended claims.

## Claims

1. A system (1) for calibrating a portable vehicle sensor (2) which is releasably mountable to a vehicle (100) at least at a first (P1) and a second (P2) position on the vehicle (100), wherein the first and second positions (P1, P2) are offset from each other, the system comprising:
- inputting means (11) configured to receive position information (x1, y1, z1) relating to the second position (P2) when or after the portable vehicle sensor (2) has been moved from the first position (P1) to the second position (P2);
- calibration means (12) configured to calibrate the position of the portable vehicle sensor (2) with respect to the second position (P2) by use of the received position information.

2. The system (1) according to claim 1, wherein the inputting means (11) is further configured to receive orientation information (ϕ, θ, Ψ) relating to the second position (P2) when or after the portable vehicle sensor (2) has been moved from the first position (P1) to the second position (P2), and wherein the calibration means (12) is further configured to calibrate the orientation of the portable vehicle sensor (2) with respect to the second position (P2) by use of the received orientation information.

3. The system (1) according to claim 1 or 2, wherein the received position information comprises information about a relative position with respect to the first position (P1), and/or wherein the received orientation information according to claim 2 comprises information about a relative orientation with respect to the first position (P1) and/or or with respect a first orientation of the portable vehicle sensor (2) at the first position (P1).

4. The system (1) according to any one of the preceding claims, further comprising a portable measurement device (3) for obtaining the position information and/or the orientation information according to claim 2.

5. The system (1) according to claim 4, wherein the portable measurement device (3) is a handheld device, such as a smartphone, a tablet computer or the like.

6. The system (1) according to claim 4 or 5, wherein the portable measurement device (3) comprises any one or a combination of a motion sensor, a rotation sensor, a GNSS system and a perception sensor for obtaining the position information and/or the orientation information.

7. The system (1) according to any one of claims 4-6, wherein the portable measurement device (3) further comprises communication means for automatically communicating the obtained position and/or orientation to the inputting means (11).

8. The system (1) according to any one of the preceding claims, further comprising a vehicle parameter database (13) comprising information about one or more reference measurement positions on the vehicle (100), wherein the calibration means (12) is further configured to calibrate the position and/or orientation according to claim 2 by use of the information about the one or more reference measurement positions.

9. The system (1) according to claim 8 when being dependent to any one of claims 4-7, wherein the system is configured to calibrate the portable measurement device (3) by use of information from the vehicle parameter database (13) which is indicative of a distance between at least two reference measurement positions on the vehicle.

10. The system (1) according to any one of the preceding claims, wherein the inputting means (11) comprises a human machine interface (HMI) for manually inputting position information and/or orientation information according to claim 2.

11. A vehicle (100) comprising at least a first and a second position (P1, P2) on the vehicle at which a portable vehicle sensor (2) is releasably mountable, wherein the first and second positions (P1, P2) are offset from each other, and wherein the vehicle (100) further comprises the system (1) according to any one of claims 1-10.

12. The vehicle (100) according to claim 11, wherein the vehicle (100) is a vehicle combination comprising a towing vehicle (105) and at least one connected vehicle (106), such as a trailer.

13. The vehicle (100) according to any one of claims 10-11, wherein the first and second positions (P1, P2) comprises a respective sensor bracket for releasably holding the portable vehicle sensor (2).

14. A method for calibrating a portable vehicle sensor (2) which is releasably mountable to a vehicle (100) at least at a first and a second position (P1, P2) on the vehicle (100), wherein the first and second positions (P1, P2) are offset from each other, the method comprising:
- receiving (S1) position information (x1, y1, z1) relating to the second position (P2) when or after the portable vehicle sensor (2) has been moved from the first position (P1) to the second position (P2);
- calibrating (S2) the position of the portable vehicle sensor (2) with respect to the second position (P2) by use of the obtained position information.

15. A control unit for a vehicle (100) for calibrating a portable vehicle sensor (2) which is releasably mountable to the vehicle (100) at least at a first and a second position (P1, P2) on the vehicle (100), wherein the control unit is configured to perform the steps of the method according to claim 14.

16. A portable measurement device (3) for a system (1) according to any one of claims 1-10, wherein the portable measurement device (3) is configured to obtain the position information and/or the orientation information according to claim 2, and further configured to provide the position and/or orientation information to the inputting means (11) of the system (1).

17. A portable measurement device (3) for calibrating a portable vehicle sensor (2) which is releasably mountable to a vehicle (100), wherein the portable measurement device is configured to:
- obtain position information (x1, y1, z1) and/or orientation information (ϕ, θ, Ψ) relating to a mounting position (P2) when or after the portable vehicle sensor (2) has been moved to the mounting position (P2);
- provide the obtained position information (x1, y1, z1) and/or orientation information (ϕ, θ, Ψ) to inputting means (11) of a system (1) for calibrating the portable vehicle sensor (2).
